# EUROPEAN PATENT APPLICATION

(11) **EP 1 862 434 A1**
(43) Date of publication of application: **05.12.2007**
(21) Application number: 06009186.5
(22) Date of filing: 04.05.2006
(51) Int. Cl.: C02F 1/54, C02F 1/68

(54) **Process for collecting and separating of water-insoluble pollutant from aqueous or soil environments, and adsorbent composition utilized therein**

(71) Applicant: The Jordanian Pharmaceutical Manufacturing Co., 11710 Naor (JO)
(72) Inventor: BADWAN, Adnan,, 11185 AMMAN, (JO); AL-REMAWI, Mayyas,, 13713 RUSSIEFA, (JO); ABEDALGHANI AL-JOUR, Nawzat,, 13110 ZARQA, (JO)
(74) Representative: Winkler, Andreas Fritz Ernst

(57) **Abstract**

The present invention relates to a process for collecting and separating of water-insoluble pollutant from aqueous or soil environments, comprising the steps of: (i) applying an adsorbent composition comprising chitin, chitosan or derivatives thereof and at least one anionic surfactant to the aqueous or soil environment polluted with water-insoluble pollutant, so that the polymer having pollutant entrapped therein is coagulated, and (ii) separating the coagulated polymer from the aqueous or soil environment; and an absorbent composition utilized in that process.

## Description

The present invention relates to a process for collecting and separating of water-insoluble pollutant from aqueous and/or soil environments, and an adsorbent composition utilized in that process.

The demand for petroleum as a source of energy has resulted in the production of 2-3 billions of metric tons per year. The production, refining and distribution of petroleum have resulted in problems of environmental pollution. For example, the distribution of petroleum includes its transport via oil tankers from the areas of high production to those of high consumption. It has been estimated that 12 million metric tons per year of transported crude oil finds its way into seawater, largely through accidental spills and deliberate discharge of ballast and wash waters from oil tankers.

The toxicity of crude and refined oil to the environment and, even more directly, to man is well documented [D.F. Boefsch et al., "Oil Spills and the Marine Environment", Ballinger Publ., Cambridge, 1974, 114 pp.; A. Nelson-Smith in the collected papers edited by P. Hepple, "Water Pollution by Oil", Elsevier, N.Y., 1971, pp. 273-80]

Oil pollution is not the only source of organic pollutant to the environment. Environmental pollutants also include other organic and also inorganic contaminants, which can be generated from various sources. Organic contaminants can be, e.g., also found in industrial waste produced by carpet and textile mills, pulp and paper mills, citrus processing plants, commercial kitchens, fast food restaurants, and food processing plants. Such organic contaminants may also include pesticides, such as herbicides, growth inhibitors, growth regulators, sterilants, and the like.

The collection and separation of organic pollutants out of water or soil is an essential step of the remedy. Then a bioremediation is recommended to get rid of these organic substances. This is usually achieved by use of living organisms to break down organic and inorganic contaminants into more basic components, to remove environmental pollutants, restore contaminated sites and prevent the accumulation of further pollutants. Generally, bioremediation is accomplished using bacteria, although other microorganisms, such as fungi and algae, have been used [e.g. Ronald M. Atlas, Chemical & Engineering News, April 3, 1995, pp. 32-42].

Further, adsorbent polymers have been described for entrapping organic and inorganic materials in US 5,939,086 and US 5,679,364, wherein hydrophilic acryl amide and acrylate polymers have been used.

In this regard, problems may arise in that these adsorbent polymers are not biodegradable, as some of the polymer remains after removal of the pollutant in the aqueous or soil environment.

It is an object of the present invention to provide a process for collecting and separating of water-insoluble pollutant from aqueous or soil environments, which overcomes the disadvantages of the prior art. Especially a process shall be provided utilizing biodegradable compounds, wherein pollutants may be collected and separated in an effective and almost complete manner.

This object is achieved by a process for collecting and separating of water-insoluble pollutant from aqueous or soil environments, comprising the steps of: (i) applying an adsorbent composition comprising chitin, chitosan or derivatives thereof and at least one anionic surfactant to the aqueous or soil environment polluted with water-insoluble pollutant, so that the polymer having pollutant entrapped therein is coagulated, and (ii) separating the coagulated polymer from the aqueous or soil environment.

Preferably, anionic surfactant is added to the aqueous or soil environment to negatively charge the pollutant, followed by the addition of the polymer.

More preferably, the water-insoluble pollutant is an organic pollutant.

The organic pollutant may be petroleum, industrial waste, pesticide, herbicide, growth inhibitor, growth regular or sterilant.

Most preferred, the organic pollutant is petroleum.

In one embodiment, the hydrophilic polymer has a molecular weight of at least 100.000, preferably from about 100.000 to about 1.000.000.

The anionic surfactant may be sodium lauryl sulfate and the aqueous environment is preferably seawater.

Preferably, the adsorbent composition is applied as solid, liquid or foam. Most preferably, the hydrophilic polymer is dissolved in acidic medium prior to application.

The adsorbent composition may comprise a microbial agent, such as bacteria, algae and/or fungi. In this embodiment, the adsorbent composition may also comprise nutrient material for the microbial agent.

Preferably, the coagulated polymer is separated by filtration, centrifugation and/or sieving from the aqueous or soil environment.

The anionic surfactant may be utilized in the process in an amount of 0.01-10 wt.%, more preferably 0.1 to 1 wt.%, based on the total weight of the aqueous or soil environment.

The polymer may be utilized in the process in an amount of 0.001-10 wt.%, preferably 0.01 to 5 wt.%, more preferably 0.01-0.1 wt.%, based on the total weight of the aqueous or soil environment.

The amounts of polymer and surfactant are based on usual amounts of pollutant in the environment, e.g. 10 ml oil in 100 ml seawater.

Most preferably, the polymer is chitosan.

According to the invention is also an adsorbent composition comprising a polymer selected from chitin, chitosan or derivatives thereof and at least one anionic surfactant employable in the inventive process.

Surprisingly, it was found that utilizing the specific adsorbent composition in the inventive process water-insoluble pollutants may be easily, successfully and almost completely removed from aqueous and soil environments. It was found that the anionic surfactant is able to form a watery emulsion. The hydrophilic polymer, e.g., chitosan, has the ability to trap and accumulate then water-insoluble organic and inorganic contaminants. The emulsification of water-insoluble contaminants in water by means of the anionic surfactant increases the power and efficiency of the adsorbent polymer to gather up the contaminants and so to get rid of water-insoluble pollutants. This provides a versatile method for water treatment technology.

Chitosan is known to adsorb on cholesterol and fatty materials. Chitosan (poly(N-acetylglycosamine)) is partially deacetylated chitin which is one of the most abundant polysaccharides in nature. It has a sugar backbone consisting of β-1,4 linked glucosamine with a high degree of N-acetylation (70-90% N-acetylglucosamine and 10-30% D-glucose units), a structure very similar to that of cellulose, wherein the only difference is the replacement of the hydroxyl by amino groups.

Chitosan is considered as a weak base due to the presence of primary amine groups. Thus, it undergoes the typically neutralization reactions of alkaline compounds. Chitosan is insoluble in neutral or alkaline aqueous media. Nearly all aqueous acids dissolve chitosan, some of them are relatively safe for use which allow formation of solutions suitable for making gels.

Chitosan is a natural substance and highly available in nature, is inexpensive, non-toxic, biodegradable, biocompatible when compared with other polymers [V.J. Morris, Bacterial Polysaccharides pp. 341-375. In Food Polysaccharides and their Applications, Alistair S.M. (editor) Marcel Dekker Inc., New York, pp. 341-375, 1995]

Pharmaceutical uses of chitosan are very numerous. These include protection of sensitive drugs from deactivating enzymes, preparation of artificial cells, using chitosan to control drug, release, to trap hemoglobin, to promote bone repair, bum dressing and contact lens material [F. Olivia, P. Buri, R. Gury. Chitosan: A unique Polysaccharide for Drug Delivery: a review. Drug Dev. Ind. Pharm. 24, pp. 979-993, 1998; V.J. Morris, Bacterial Polysaccharides pp. 341-375. In,Food Polysaccharides and Their Applications, Alistair S.M. (editor), Marcel Dekker Inc., New York, pp. 341-375, 1995; 56-L. Tay, L. Khoh, C. Loh, and E. Khor. Alginate-Chitosan Coacervateation in Production of Artificial Seeds. Biotech. Bioeng., pp. 42, 449-454, 1993].

Chitosan acquires a positively charged "cationic" polymer when exposed to acid because of the protonation of the primary amine groups. It coagulates, if a negatively charged molecule is added to its solution. This property was advantageously taken in the present invention to formulate a system that has the ability to interact with organic materials such as petroleum.

Surfactants are materials that have hydrophilic and hydrophobic character. When placed in solution, they aggregate in form of micelles. The core of a micelle is hydrophobic. Hydrophobic substances favor deposition inside the core of these micelles. Thus, water-insoluble, especially organic pollutants will be dissolved inside the core structure. The anionic surfactants acquire an anionic charge outside. This enables complexation reaction with cationic material, such as chitosan.

Anionic surfactants are used to gather up and include all trace organic material inside their core structure. According to the process of the invention a complex material containing pollutant, anionic surfactant and chitosan is obtained in one single insoluble mass that can be easily removed by mechanical means such as filtration, centrifugation or sieving.

Examples of anionic surfactants include n-alkyl sulfates, such as sodium lauryl sulfate, sodium stearate, sodium dodecyl sulfate, sodium alkyl sulfate, sodium decyl sulfate, sodium tetradecyl sulfate, sodium cetyl sulfate, sodium octadecyl sulfate, triethanolamine alkyl sulfates, ammonium alkyl sulfates, alkyl sulfonates, such as sodium alkyl benzoic sulfo acids, alkyl polyglycole ether sulfates, such as sodium alcohol ethoxy sulfate, alkyl sulfates such as sodium salt of an alkyl amino sulfate, sulfonates, such as isopropyl naphthalene sodium sulfonate, and dioctyl esters of sodium sulfosuccinate.

Anionic surfactants are biodegradable in seawater [D. Sales, J. Perales, M. Quioga, a Biol. Inst. Esp. Oceanog. 15 (1-4), 1999: 517-522].

Additionally, it has been surprisingly found that after separating the coagulated polymer from the aqueous or soil environment, such as seawater, factory waste water and soil environments, the concentration of the anionic surfactant in the environment is very low, i.e. significantly less than 0.008 wt.%, and the amount of chitosan is also below 0.003 wt.%, based on the total weight of the cleaned environment. Again, it has to be emphasized that both substances are biodegradable.

In the process of the present invention, the adsorbent composition may also include a microbial agent, such as bacteria, algae and fungi, or combinations thereof, which are known in the art to have biodegradable activity against organic and inorganic contaminants.

In another embodiment of the invention, the adsorbent composition may also include any nutrient material useful for the survival of the microbial agent.

After coagulation, the formed lumps can be easily collected by any mechanical process.

Further advantages and features of the present invention are now illustrated in the examples section below together with the accompanying drawing, wherein
Fig. 1 illustrates lump formation of seawater with an oil spot after addition of chitosan powder only;

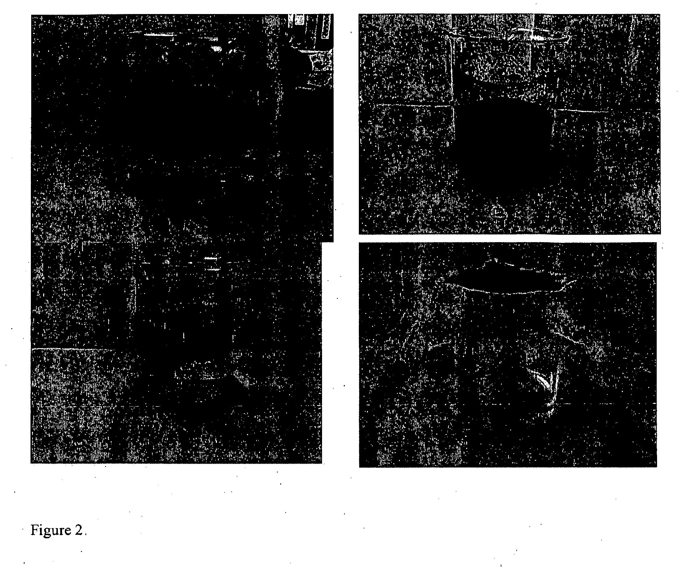

Fig. 2 illustrates steps for carrying out a laboratory example of the inventive process, wherein in figure 2A the addition of a crude oil spot on the surface of seawater is shown, in figure 2B the seawater with crude oil after addition of anionic surfactant and stirring is shown, in figure 2C the seawater of figure 2B after addition of the chitosan is shown, forming a solid lump at the surface and in figure 2D the collection of the solid lump out of seawater is demonstrated;
Fig. 3 shows a UV spectrum of seawater, seawater after treatment and seawater with a trace percentage of chitosan dissolved therein; and
Fig. 4 shows an UV spectrum of seawater, seawater after treatment and seawater with a trace percentage of anionic surfactant dissolved therein.

### Comparative example 1

### Use of chitosan powder to collect an induced oil spot over seawater

To a volume of 100 ml seawater 10 ml petroleum oil was added to the surface of the seawater. To convert the non-ionic organic matter (crude oil) to a solid lump an amount of chitosan powder (>5 grams) was added to adsorb the oil.

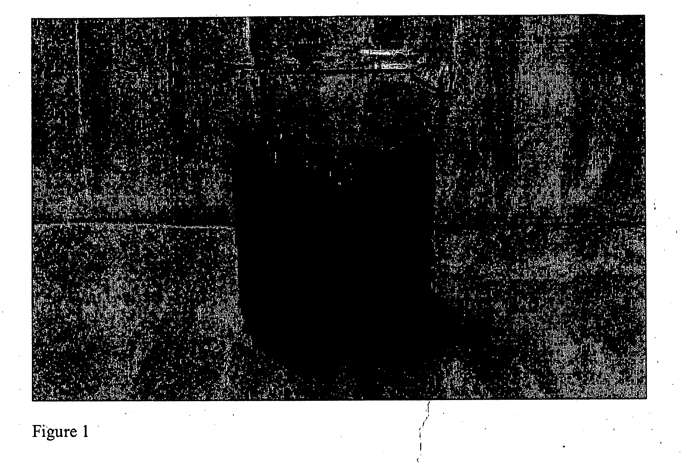

Fig. 1 shows a weak solid lump formed after the addition of chitosan powder. The lump was easily dissociated in seawater before the filtration step and large percent of oil leaked again.

### Example 2

### Collection of petroleum oil from the surface of seawater using chitosan and anionic surfactant

A solution (1 wt.%) of high molecular weight chitosan (M.W. >100.000) was prepared by dissolving 1 gram of chitosan in 100 ml 0.1 M HCl.

To a volume of 100 ml seawater 10 ml crude oil was added to the surface of the seawater, and about 0.5 grams of sodium lauryl sulfate were added to the oil water mixture with sufficient stirring to ensure that the oil is completely emulsified with micelles of the surfactant. Then about 4 ml of 1 wt.% chitosan solution prepared as above where added dropwise to the emulsified solution with gentle stirring until reaching the end point which is the separation and collection of the all emulsified oil. Finally, the mixture was filtered using a piece of cloth. The non-ionic organic matter (crude oil) was converted to a solid lump and filtered. This composition was observed to yield the maximum trapping power of organic matter. As can be taken from comparative example 1 and example 2, the amount of chitosan required in example 2 is significantly lower than the amount for example 1. Thus, the use of the inventive process for water treatment has the advantage of increasing efficiency in cleaning and also decreasing the amount of chitosan required for cleaning.

### Example 3

### Presence of chitosan and sodium lauryl sulfate after water treatment

Ultraviolet spectra in the range of 200-400 nm utilizing an UV spectrum instrument (Beckmann DU 640i) were taken for seawater before cleaning, seawater after cleaning from oil (treated seawater), and seawater containing either low percent of sodium lauryl sulfate (0.008 wt.%) and seawater containing low percent of chitosan (0.003 wt.%).

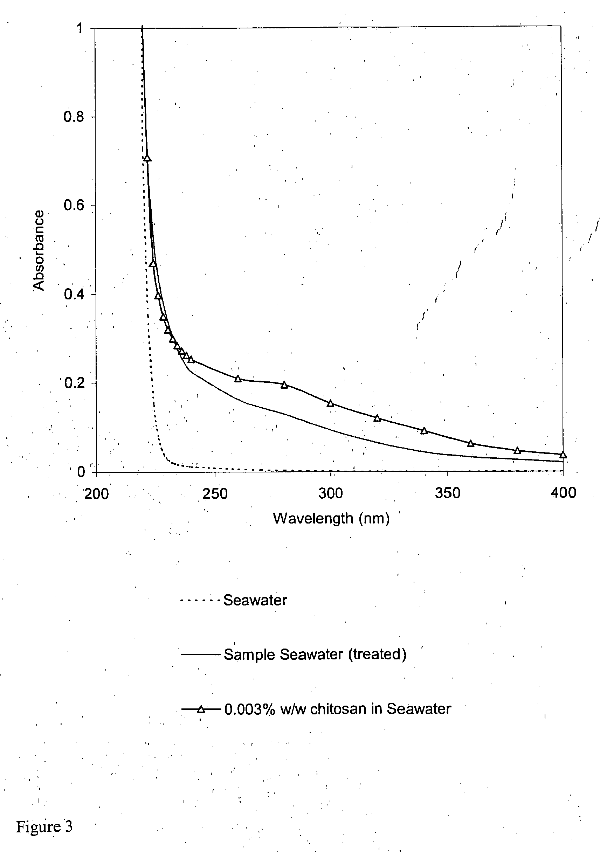

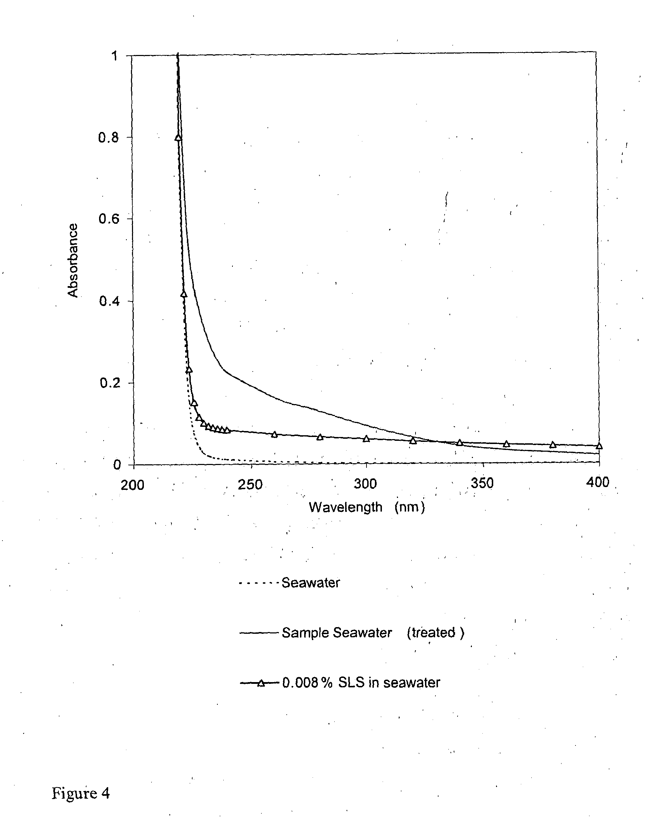

The UV spectra of seawater, treated seawater, diluted chitosan and diluted sodium lauryl sulfate solutions are shown in figures 3 and 4.

As can be taken from figures 3 and 4, the remaining percentage of chitosan and sodium lauryl sulfate remaining in the treated seawater is very low.

Thus, seawater may be retained with a good quality after removal of the water-insoluble pollutants. Only very low percentage of biodegradable material is present which may not form a hazardous effect on the environment.

The features disclosed in the foregoing description, the claims and the accompanying drawings may, both separately and in any combination thereof, be material for realizing the invention in diverse forms thereof.

## Claims

1. Process for collecting and separating of water-insoluble pollutant from aqueous or soil environments, comprising the steps of:
(i) applying an adsorbent composition comprising chitin, chitosan or derivatives thereof and at least one anionic surfactant to the aqueous or soil environment polluted with water-insoluble pollutant, so that the polymer having pollutant entrapped therein is coagulated, and
(ii) separating the coagulated polymer from the aqueous or soil environment.

2. Process according to claim 1, wherein the anionic surfactant is added to the aqueous or soil environment to negatively charge the pollutant, followed by the addition of the polymer.

3. Process according to claim 1 or 2, wherein the water-insoluble pollutant is an organic pollutant.

4. Process according to claim 3, wherein the organic pollutant is petroleum, industrial waste, pesticide, herbicide, growth inhibitor, growth regulator or sterilant.

5. Process according to claim 4, wherein the organic pollutant is petroleum.

6. Process according to any of the preceding claims, wherein the polymer has a molecular weight of at least 100.000, preferably from about 100.000 to about 1.000.000.

7. Process according to any of the preceding claims, wherein the anionic surfactant is sodium lauryl sulfate.

8. Process according to any of the preceding claims, wherein the aqueous environment is seawater.

9. Process according to any of the preceding claims, wherein the adsorbent composition is applied as solid, liquid or foam.

10. Process according to claim 9, wherein the polymer is dissolved in acidic medium prior to application.

11. Process according to any of the preceding claims, wherein the adsorbent composition comprises a microbial agent, such as bacteria, algae and/or fungi.

12. Process according to claim 11, wherein the adsorbent composition comprises nutrient material for the microbial agent.

13. Process according to any of the preceding claims, wherein the coagulated polymer is separated by filtration, centrifugation and/or sieving from the aqueous or soil environment.

14. Process according to any of the preceding claims, wherein the anionic surfactant is utilized in the process in an amount of 0.01-10 wt.%, more preferably 0.1 to 1 wt.%, based on the total weight of the aqueous or soil environment.

15. Process according to any of the preceding claims, wherein the polymer is utilized in the process in an amount of 0.001-10 wt.%, preferably 0.01 to 5 wt.%, more preferably 0.01-0.1 wt.%, based on the total weight of the aqueous or soil environment.

16. Process according to any of the preceding claims, wherein the polymer is chitosan.

17. Adsorbent composition comprising a polymer selected from chitin, chitosan or derivatives thereof and at least one anionic surfactant employable in the process according to any of the claims 1 to 16.
